# EUROPÄISCHE PATENTSCHRIFT

(11) **EP 3 105 020 B1**
(45) Veröffentlichungstag und Bekanntmachung des Hinweises auf die Patenterteilung: **16.01.2019**
(21) Anmeldenummer: 15703779.7
(22) Anmeldetag: 10.02.2015
(51) Int. Cl.: B26D 1/157, B26D 7/32

(54) **AUFSCHNEIDEVORRICHTUNG MIT EINEM ZUFUHRKANAL FÜR ZWISCHENLEGEPAPIER**
CUTTING DEVICE WITH A FEED CHANNEL FOR INTERLEAVING PAPER
DISPOSITIF DE COUPE AVEC UN CONDUIT D'ALIMENTATION DE PAPIER DE SÉPARATION

(30) Priorität: 12.02.2014 DE 102014202525
(43) Veröffentlichungstag der Anmeldung: 21.12.2016
(73) Patentinhaber: GEA Food Solutions Germany GmbH, 35216 Biedenkopf-Wallau (DE)
(72) Erfinder: HÖRBERG, Winfried, 87634 Obergünzburg (DE); BOCHTLER, Alois, 87743 Egg (DE)
(74) Vertreter: Kutzenberger Wolff & Partner
(86) Internationale Anmeldenummer: PCT/EP2015/052755
(87) Internationale Veröffentlichungsnummer: WO 2015/121251

(56) Entgegenhaltungen:
- DE-A1- 19 913 203
- DE-A1- 19 926 461
- DE-U1- 8 237 311

## Beschreibung

Die vorliegende Erfindung betrifft eine Vorrichtung zum Einlegen eines Zwischenlegepapiers zwischen einer ersten und einer zweiten Lebensmittelscheibe bzw. einer zweiten und dritten, dritten und vierten Lebensmittelscheibe usw., wobei das Zwischenlegepapier in einem Kanal geführt ist und in einem Zeitintervall zwischen dem Aufschneiden der ersten und der zweiten Lebensmittelscheibe aus dem Kanal in einen Aufschneidebereich gelangt, wobei der Kanal so vorgesehen ist, dass er den ursprünglich ebenen Querschnitt des Zwischenlegepapiers formt. Des Weiteren betrifft die vorliegende Erfindung eine Aufschneidevorrichtung und ein Zwischenlegepapier.

Derartige Vorrichtungen zum Einlegen eines Zwischenlegepapiers sind aus dem Stand der Technik, beispielsweise der DE 199 13 203, der DE 82 37 311 U1 und der DE 199 26 461 A1 bekannt. Die dort beschriebene Vorrichtung hat jedoch den Nachteil, dass sie vergleichsweise aufwändig herzustellen ist, dass das Zwischenlegepapier vergleichsweise dick sein muss und/oder dass sie vergleichsweise schwierig zu montieren ist.

Es war deshalb die Aufgabe der vorliegenden Erfindung, eine Vorrichtung zur Verfügung zu stellen, die die Nachteile des Standes der Technik nicht aufweist.

Gelöst wird die Aufgabe mit einer Vorrichtung zum Einlegen eines Zwischenlegepapiers zwischen einer ersten und einer zweiten Lebensmittelscheibe bzw. einer zweiten und dritten, dritten und vierten Lebensmittelscheibe usw., wobei das Zwischenlegepapier in einem Kanal geführt ist und in einem Zeitintervall zwischen dem Aufschneiden der ersten und der zweiten Lebensmittelscheibe aus dem Kanal in einen Aufschneidebereich gelangt, wobei der Kanal so vorgesehen ist, dass er den ursprünglich ebenen Querschnitt des Zwischenlegepapiers formt und zumindest der Kanal einstückig vorgesehen ist.

Die vorliegende Erfindung betrifft eine Vorrichtung zum Einlegen eines Zwischenlegepapiers zwischen eine erste und eine zweite Lebensmittelscheibe bzw. einer zweiten und dritten, dritten und vierten Lebensmittelscheibe usw. Bei einer derartigen Lebensmittelscheibe handelt es sich beispielsweise um eine Käse-, Wurst- oder Schinkenscheibe. Das Zwischenlegepapier kann ein beschichtetes, insbesondere gewachstes Papier, aber auch eine Folie, insbesondere eine Kunststofffolie sein. Das Zwischenlegepapier wird erfindungsgemäß in einem Kanal geführt und in dem Zeitintervall zwischen dem Aufschneiden der ersten und der zweiten Lebensmittelscheibe aus dem Kanal in den Aufschneidebereich eingeführt, insbesondere eingeschossen. Da für das Einführen des Zwischenlegepapiers zwischen zwei Lebensmittelscheiben bei Hochleistungsaufschneidevorrichtungen, die bis zu 1.000 oder mehr Lebensmittelscheiben pro Minute abschneiden, nur sehr wenig Zeit zur Verfügung steht und im Übrigen das Schneidmesser auch eine erhebliche Luftströmung erzeugt, ist es vorteilhaft, wenn der ebene Querschnitt des Zwischenlegepapiers so geformt ist, dass es mindestens eine Ein- und/oder Ausbuchtung aufweist, d. h. von seiner ursprünglich in der Regel ebenen Form abweicht. Dadurch stabilisiert sich das Zwischenlegepapier und kann dadurch beispielsweise dünner ausgeführt und/oder schneller in den Aufschneidebereich eingeschossen werden.

Jede Ein- und/oder Ausbuchtung verläuft vorzugsweise parallel zu der Einführungsrichtung des Zwischenlegepapiers. Die Verformung ist vorzugsweise reversibel, d.h. nach dem Verlassen des Kanals formt sich das Zwischenlegepapier in seine ursprünglich eben Form zurück. Das Zwischenlegepapier kann so geformt sein, dass lediglich sein Randbereich geformt ist. Alternativ kann aber auch der gesamte Querschnitt des Zwischenlegepapiers geformt sein. Das Zwischenlegepapier kann kreissegmentförmig oder ellipsensegmentförmig geformt sein oder eine Mehrzahl von Bergen und/oder Tälern aufweisen. Es ist bevorzugt, dass der Randbereich des Zwischenlegepapiers geformt ist.

Erfindungsgemäß ist nun zumindest der Kanal einstückig vorgesehen. Dadurch kann der Kanal wesentlich präziser vorgesehen werden, als dies bei Vorrichtungen gemäß dem Stand der Technik möglich war. Der Kanal weist keine Verbindungsstellen auf, die zueinander zentriert werden müssen und/oder an denen sich das Zwischenlegepapier verhaken kann. Des Weiteren kann die Höhe des Querschnitts des Kanals, d.h. das Maß, um das der Kanal höher ist als die Stärke des Zwischenlegerpapiers, reduziert werden. Außerdem kann die Stärke des Zwischenlegepapiers reduziert werden. Vorzugsweise beträgt die Stärke des Zwischenlegepapiers 30 - 75 g/m², bei Zwischenlegefolie 30 - 75 µm und/oder die Höhe des Kanals 0,1mm - 0,2mm.

Beispielsweise wird die Vorrichtung, insbesondere der Kanal, durch ein sogenanntes Rapid-Prototyping-Verfahren oder durch Gießen oder durch Spritzgießen hergestellt. Eine bevorzugte Ausführungsform der Herstellung des Kanals ist ein 3D-Druckverfahren. Der Kanal kann auch aus Stahl durch Drahterodieren hergestellt werden, insbesondere solange zwischen Ein- und Austrittsöffnung eine gerade Verbindung besteht. Das 3D-Druckverfahren hat den Vorteil, dass man komplexe Formgebungen in der Papierführung realisieren kann.

Der bisher immer zwei- oder mehrteilig vorgesehene Führungskanal muss bei der erfindungsgemäßen Ausführungsform nicht mehr zusammengesetzt werden und da keine

Verbindungsstellen vorhanden sind, kann sich das Zwischenlegepapier daran auch nicht mehr verhaken.

Unter 3D Drucken versteht man in erster Linie den Fertigungsprozess des Urformens. 3D-Drucken erflogt mit 3D-Drucker, die eine spezielle Unterart der Maschinenklasse der digitalen Fabrikatoren sind. Innerhalb der Klasse der digitalen Fabrikatoren gehören die 3D-Drucker zur Teilklasse der additiven, also anhäufenden, aufbauenden Fabrikatoren.

Die bevorzugten Techniken des 3D-Druckens sind das selektive Laserschmelzen und das Elektronenstrahlschmelzen für Metalle und das selektive Lasersintern für Polymere, Keramik] und Metalle, die Stereolithografie und das Digital Light Processing für flüssige Kunstharze und das Polyjet-Modeling sowie das Fused Deposition Modeling für Kunststoffe und teilweise Kunstharze.

Vorzugsweise beträgt die Auflösung eines Kunstharz-Druckers 0,01 - 0,07 mm in x- und y-Richtung und 0.005 und 0,025 mm auf der z-Achse.

Vorzugsweise arbeiten 3D-Druckmaschinen nur mit einem Werkstoff oder einer Werkstoffmischung und einem Druckverfahren. Es ist aber auch bevorzugt mehrere Werkstoffe gleichzeitig oder sequentiell zu drucken.

Beispielsweise kann das Drucken von Kunststoffen in unterschiedlichen Härtegraden und/oder Farben sequentiell oder simultan erfolgen.

Vorzugsweise ist nicht nur der Kanal, sondern die gesamte Schneidleiste einstückig vorgesehen. Alternativ wird der Kanal als ein Modul zur Verfügung gestellt, das an der Schneidleiste befestigbar ist. Vorzugsweise weist die Schneidleiste eine Tasche auf, die das Modul aufnimmt.

Der Kanal ist vorzugsweise aus einem Kunststoffmaterial, einem Metall und/oder Keramik gefertigt. Alle diese Materialien können beim 3D-Drucken verwendet werden.

Die Formung des Zwischenlegepapiers ist vorzugsweise elastisch und nicht plastisch, so dass das Zwischenlegepapier beispielsweise nachdem es von dem Schneidmesser abgeschnitten worden ist, seine ursprüngliche ebene Form einnimmt.

Bei der Führung für das Produkt, das insbesondere ein sogenannter Lebensmittelriegel ist, handelt es sich beispielsweise um eine sogenannte Brille die in der Regel Teil einer Schneidleiste ist, durch die das Produkt hindurch in Richtung des Schneidmessers geführt wird. Die Führung umschließt das Produkt an mindestens zwei vorzugsweise 3 Seiten. Das aufzuschneidende Produkt wird durch die Führung hindurch in Richtung eines Schneidmessers transportiert, das Lebensmittelscheiben von dem vorderen Ende des Produkts abtrennt. Diese Führung wirkt zusätzlich und gemäß einer bevorzugten Ausführungsform der vorliegenden Erfindung gleichzeitig als Schneidleiste, die beim Abschneiden einer Lebensmittelscheibe mit dem Schneidmesser zusammenwirkt und dadurch gewährleistet, dass die jeweilige Lebensmittelscheibe exakt abgeschnitten wird. Die Schneidleiste definiert zusammen mit dem Schneidmesser eine Schneidebene, in der die jeweilige Lebensmittelscheibe von dem Produkt abgetrennt wird. Zwischen der Schneidleiste und der Ebene, in der das Schneidmesser rotiert befindet sich ein sogenannter Schneidspalt, der jedoch möglichst gering sein sollte, um Bartbildung an der jeweiligen Lebensmittelscheibe oder Hacken statt Schneiden zu vermeiden.

Das Kanalende kann beispielsweise mit mehreren Erhebungen und Vertiefungen, beispielsweise gezackt und/oder gewellt vorgesehen sein. Gemäß einer anderen bevorzugten Ausführungsform ist das Kanalende kreissegmentförmig oder ellipsensegmentförmig ausgeführt. Mindestens ein Ende des Zwischenlegepapiers, das sich parallel zu dessen Bewegungsrichtung im Kanal erstreckt, ist vorzugsweise in Richtung der Führung des Produkts gebogen. Dies gilt auch für den Fall, dass das Kanalende nicht bezogen auf die Vertikale abschnittsweise oberhalb des untersten Punkts der Produktauflage vorgesehen ist.

Vorzugsweise ist das Kanalende zumindest abschnittsweise parallel zu der Kontur der Produktauflage vorgesehen.

Vorzugsweise wird der Kanal, insbesondere als Austauschmodul, reversibel an der Schneidleiste angebracht und kann somit leicht ausgetauscht werden. Dadurch ist es möglich, für unterschiedliche Zwischenlegepapiere unterschiedliche Kanäle leicht und einfach zur Verfügung zu stellen. Bei einem Produktwechsel kann das Zwischenlegepapier oder der Kanal in dem es geformt wird, leicht mitausgetauscht werden, ohne dass die Schneidleiste demontiert werden muss. Die Austauschmodule werden vorzugsweise in Taschen des Interleavers gesteckt wobei dazu vorzugsweise die Schneidleiste angehoben werden muss. Die Austauschmodule werden in die Taschen des Interleavers gesteckt, dazu muss die Schniedleiste angehoben werden.

Der Kanal kann so geformt sein, dass das Zwischenlegepapier eine Grifflasche aufweist. Im Wesentlichen kann auf die oben gemachten Ausführungen verwiesen werden.

Dann ist das Kanalende des Kanals so vorgesehen, dass das Einlegepapier so von dem Kanal geformt wird, dass es nach dem Abschneiden und wenn es wieder eine ebene Form eingenommen hat, eine Grifflasche aufweist, die von zwei oder mehr Fingern eines Benutzers ergriffen werden kann. Dadurch wird das Entnehmen von einzelnen Lebensmittelscheiben, beispielsweise aus einer Verpackung oder von einem Stapel, erleichtert. Die Grifflasche befindet sich vorzugsweise an dem Ende des Zwischenlegepapiers, das sich senkrecht zu dessen Bewegungsrichtung erstreckt.

Es ist auch eine Vorrichtung möglich, bei der der Kanal, insbesondere das Kanalende, so geformt ist, dass das Zwischenlegepapier mindestens eine, vorzugsweise zwei, abgeflachte Ecken aufweist. Im Wesentlichen kann auf die oben gemachten Ausführungen verwiesen werden.

Der Kanal ist dann so vorgesehen, dass das Zwischenlegepapier in ihm so geformt wird, dass nach dem Abtrennen von dem Endlosband und nachdem das Zwischenlegepapier wieder eine ebene Form erlangt hat, mindestens eine, vorzugsweise zwei, Ecken, insbesondere zwei gegenüberliegende Ecken, des Zwischenlegepapier abgeflacht sind. Diese erfindungsgemäße oder bevorzugte Ausführungsform der vorliegenden Erfindung hat den Vorteil, dass das Zwischenlegepapier seltener in die Siegelebene einer Verpackung, in der eine Lebensmittelscheibenportion mit den dazwischenliegenden Einlegepapieren platziert wird, gelangt, so dass weniger Verpackungen mit einer unzureichenden Siegelung erzeugt werden bzw. für das gleiche Produkt eine kleinere Packung mit weniger Leerraum um das Produkt herum hergestellt werden kann

Noch ein weiterer bevorzugter Gegenstand der vorliegenden Erfindung ist eine Aufschneidevorrichtung mit einem Schneidmesser, das von dem vorderen Ende des Produkts Lebensmittelscheiben abschneidet, wobei zwischen zwei Scheiben ein Einlegepapier vorgesehen ist, das aus einem Kanal austritt und das das Schneidmesser abtrennt. Erfindungsgemäß weist die Aufschneidevorrichtung die erfindungsgemäße Vorrichtung zum Einführen eines Zwischenlegepapier in den Aufschneidebereich auf.

Vorzugsweise weist die Aufschneidevorrichtung auch bei längeren Zwischenlegepapieren außer dem Kanal keine weitere Führung und/oder Stützung wie beispielsweise einen Luftstrom, der ein Abknicken des Papiers beim Einführen in den Aufschneidebereich verhindert, auf. Dadurch ist die erfindungsgemäße Aufschneidevorrichtung hygienischer und weist geringere Betriebskosten auf.

Alternativ oder zusätzlich kann ein dünneres Einlegepapier als beim Stand der Technik verwendet werden. Dies hat neben der Materialersparnis den Vorteil, dass die Einlegepapierrollen leichter sind oder seltener gewechselt werden müssen.

Vorzugsweise weist die Aufschneidevorrichtung eine Schneidleiste auf, in der eine Tasche vorgesehen ist, in der der Kanal, aus dem das Zwischenlegepapier ausgeschossen wird, austauschbar vorgesehen werden kann.

Ein weiterer Gegenstand der vorliegenden Erfindung ist ein Verfahren gemäß Patentanspruch 7.

Erfindungsgemäß wird der Kanal aus einem Stück hergestellt und ist nicht mehr, wie beim Stand der Technik aus mehreren Stücken zusammengesetzt. Folglich treten keine Verbindungsfugen auf und es müssen keine Teile des Kanals relativ zueinander ausgerichtet werden.

Im Folgenden wird die Erfindung anhand der Figuren 1 - 9 erläutert.

Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
**Figur 1** zeigt die erfindungsgemäße Aufschneidevorrichtung.
**Figur 2** zeigt eine erste Ausführungsform der erfindungsgemäßen Vorrichtung zum Einführen eines Zwischenlegepapiers in den Aufschneidebereich der Aufschneidevorrichtung.
**Figur 3a** zeigt eine Lebensmittelportion gemäß dem Stand der Technik.
**Figur 3b** zeigt eine Lebensmittelportion mit einem Zwischenlegepapier.
**Figuren 4 - 5** zeigen eine weitere Ausführungsform der erfindungsgemäßen Vorrichtung zum Einführen eines Zwischenlegepapiers in den Aufschneidebereich einer Aufschneidevorrichtung.
**Figuren 6 - 7** zeigen jeweils eine Ausführungsform des Kanalendes der erfindungsgemäßen Vorrichtung.
**Figur 8** zeigt das Zwischenlegepapier.
**Figur 9** zeigt eine Verpackung mit einem Zwischenlegepapier.

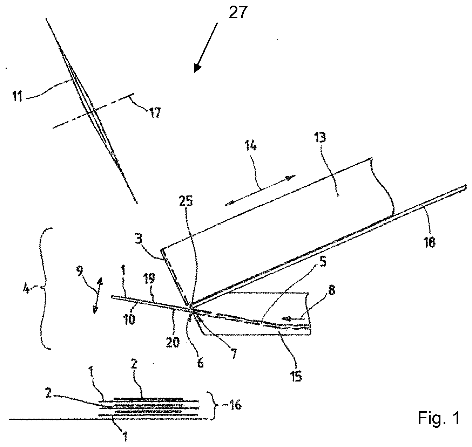

**Figur 1** zeigt eine erfindungsgemäße Aufschneidevorrichtung 27. Diese Aufschneidevorrichtung weist ein Schneidmesser 11 auf, das vorzugsweise um eine Achse 17 rotiert und von dem vorderen Ende eines Produktes 13, beispielsweise einem Wurst-, Käse- oder Schinkenriegel, Lebensmittelscheiben 2, 3 abtrennt. Dabei wird das Produkt 13, hier ein Lebensmittelriegel, wie durch den Pfeil 14 dargestellt, entlang einer Auflage 18 in Richtung des Schneidmessers transportiert. Für sogenannte Leerschnitte kann das Produkt von dem Schneidmesser zurückgezogen und/oder das Schneidmesser von dem vorderen Ende des Produkts wegbewegt werden. Der Transportweg des Produkts zwischen zwei Schnitten des Schneidmessers 11 bestimmt die Dicke der jeweiligen Lebensmittelscheibe. Vorzugsweise ist am Ende der Auflage 18 eine Schneidleiste 21 vorgesehen, die beim Schneiden der Lebensmittelscheibe mit dem Schneidmesser 11 zusammenwirkt. Die abgeschnittenen Lebensmittelscheiben 2, 3 werden zu einer Portion 16, hier einem Scheibenstapel, konfiguriert, wobei erfindungsgemäß jeweils zwischen zwei Lebensmittelscheiben und vorzugsweise unter der untersten Lebensmittelscheibe ein sogenanntes Zwischenlegepapier 1 vorgesehen ist, das verhindert, dass die Lebensmittelscheiben 2 zu stark aneinander haften. Das Zwischenlegepapier vereinfacht dem Benutzer die Vereinzelung der jeweiligen Lebensmittelscheibe aus der Portion 16. Bei der erfindungsgemäßen Aufschneidevorrichtung handelt es sich vorzugsweise um einen sogenannten Hochleistungsslicer, der 200 - 1.000

Lebensmittelscheiben pro Minute oder mehr von dem Produkt abtrennt. Dementsprechend klein ist das Zeitintervall, das zum Platzieren des Zwischenlegepapiers zwischen zwei Lebensmittelscheiben zur Verfügung steht. Außerdem erzeugt das rotierende Messer einen erheblichen Luftstrom, der ebenfalls bei der Anordnung des Zwischenlegepapiers zwischen zwei Lebensmittelscheiben berücksichtigt werden muss. Das Zwischenlegepapier 1 wird mittels der Vorrichtung 15, die sich in der Regel unterhalb der Auflage 18 des Produktes 13 befindet, in den Aufschneidebereich 4 eingeschossen. In der Regel wird das Zwischenlegepapier auf einer Rolle zur Verfügung gestellt und dann in Richtung des Schneidmessers transportiert, um eine gewisse Länge 10 in den Aufschneidebereich eingeschossen und dann von dem Schneidmesser 11 abgetrennt. Zum Einführen des Zwischenlegepapiers 1 in den Aufschneidebereich 4 weist die Vorrichtung 15 einen Kanal auf, mit dem das Zwischenlegepapier in der durch den Pfeil 8 dargestellten Richtung transportiert wird. Um zu vermeiden, dass sich das Zwischenlegepapier beim Einführen in den Aufschneidebereich unkontrolliert verhält insbesondere abknickt, wird dieses von dem Kanal, insbesondere von dem Kanalende 6 bzw. von der am Kanalende 6 vorgesehenen Öffnung 7, so geformt, dass es nicht mehr eben ist, sondern beispielsweise einen von der ebenen Form abweichenden hochstehenden Bereich, der sich parallel zu der Förderrichtung 8 erstreckt, aufweist. Durch diese Profilierung 9 des Zwischenlegepapiers quer zu seiner Förderrichtung 8 wird die Stabilität des Einlegepapiers erhöht, so dass dieses schneller in den Aufschneidebereich 4 transportiert und/oder dünner vorgesehen werden kann.

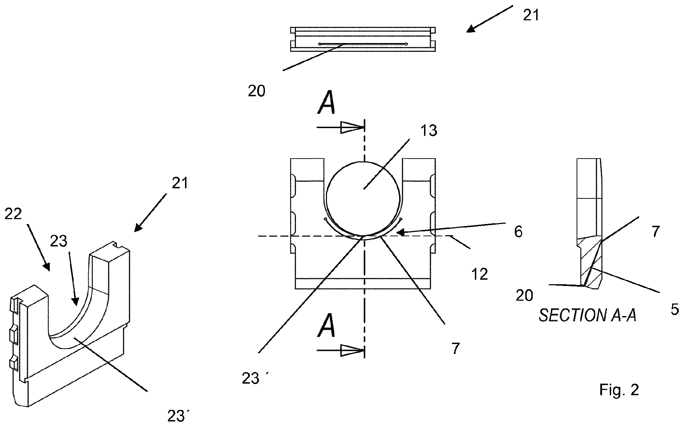

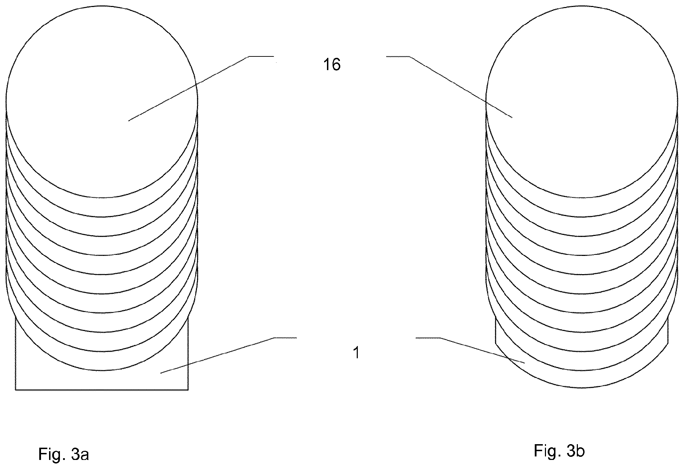

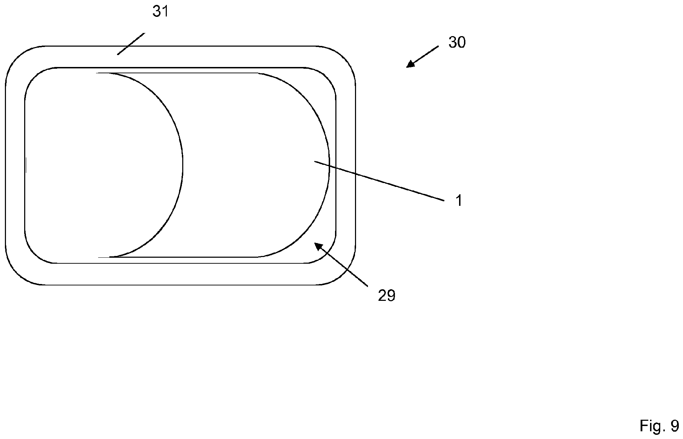

**Figur 2** zeigt eine erste Ausführungsform der erfindungsgemäßen Vorrichtung zum Einführen eines Zwischenlegepapiers in den Aufschneidebereich, die hier als sogenannte Schneidleiste 21 vorgesehen ist. Diese Schneidleiste 21 weist eine Produktführung 22 mit einer Produktauflage 23 auf. Die Produktführung 22 führt und/oder hält das Produkt 13 während des Abschneidens einer Lebensmittelscheibe von dem vorderen Ende des Produktes. Gleichzeitig wirkt die Schneidleiste mit dem Schneidmesser zusammen, wodurch die Qualität des jeweiligen Schnitts verbessert wird. Unterhalb der Produktführung 22 ist die Austrittsöffnung 7 des Kanals 5, durch den das Zwischenlegepapier in den Aufschneidebereich eingeschossen wird, zu sehen, das in dem vorliegenden Fall kreissegmentförmig gestaltet ist, so dass auch das austretende Papier eine kreissegmentförmige Form einnehmen wird. Es ist deutlich zu erkennen, dass die Öffnung 7 bezogen auf die Vertikale abschnittsweise, hier mit seinen beiden äußeren Enden oberhalb des untersten Punkts oder der Linie 23' der Produktauflage 23 vorgesehen ist. Durch diese Ausführungsform des Kanals 5 bzw. dessen Öffnung 7 wird neben der Stabilisierung des Zwischenlegepapiers beim Einschießen zusätzlich erreicht, dass zwei gegenüberliegende Ecken des Zwischenlegepapiers, wie beispielsweise in Figur 3b oder in Figur 9 dargestellt, abgeflacht, hier abgerundet, sind, sobald das Einlegepapier wieder eine ebene Form einnimmt. Weiterhin ist in Figur 2 der Kanalanfang 20 dargestellt, durch den das Zwischenlegepapier in den Kanal 5 eintritt, der vorzugsweise eben gestaltet ist. Dadurch, dass der Kanal gemäß einer bevorzugten oder erfindungsgemäßen Ausführungsform einstückig ausgeführt ist, ergeben sich keine Zentrierungsprobleme wie bei einer mehrstückigen Ausführungsform des Kanals 5. Außerdem können die Übergänge von dem ebenen Eingangsbereich zu dem kreissegmentförmigen Ausgangsbereich des Kanals kontinuierlich gestaltet werden, wodurch ein Stau des Zwischenlegepapiers zumindest vermindert wird. In dem vorliegenden Fall ist die gesamte Schneidleiste 21 einstückig ausgeführt und vorzugsweise gemäß einem sogenannten Rapid-Prototyping-Verfahren hergestellt, bei dem partikuläre Kunststoffteile von einem 3D Drucker auf eine Auflagefläche gedruckt und dort unter Einwirkung von Druck und/oder Temperatur und/oder Strahlung und/oder einem Lösemittel mit den restlichen Partikeln zu einem einstückigen Bauteil verbunden werden. Der Fachmann erkennt, dass aber auch andere Herstellungsverfahren eingesetzt werden können, mit denen zumindest der Kanal 5, vorzugsweise die gesamte Schneidleiste 21, einstückig hergestellt werden kann.

**Figur 3a** zeigt eine Portion 16 mit einem Zwischenlegepapier 1 gemäß dem Stand der Technik. Dieses Einlegepapier weist an seinem vorderen Ende einen geraden Schnitt auf, so dass die beiden gegenüberliegenden Ecken des Zwischenlegepapiers 1 relativ weit aus der Portion herausstehen. Dieser Nachteil wird bei der Ausführungsform gemäß **Figur 3b** vermindert, bei der die beiden gegenüberliegenden Ecken abgeflacht, hier abgerundet, worden sind. Insbesondere ist der vordere dargestellte Abschnitt des Zwischenlegepapiers bei der Ausführungsform gemäß Figur 3b kreissegmentförmig dargestellt. Durch die Abflachung der Ecken wird, wie insbesondere anhand von Figur 9 erläutert werden wird, vermieden, dass das Zwischenlegepapier in den Siegelbereich der Verpackung, in die die Portion verpackt wird, gelangt. Obwohl nur ein Zwischenlegepapier dargestellt ist, erkennt der Fachmann, dass vorzugsweise zwischen jeweils zwei Lebensmittelscheiben Zwischenlegepapiere angeordnet sind.

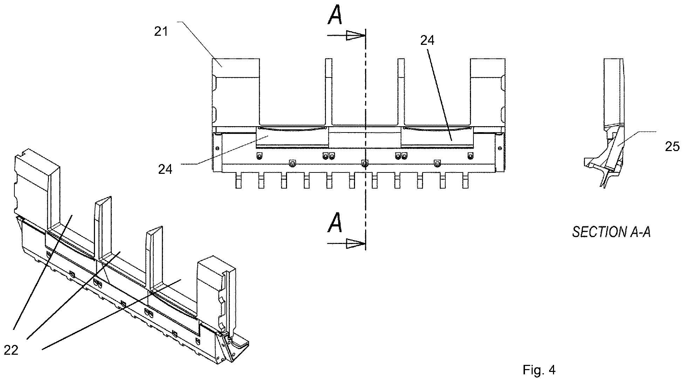

**Figur 4** zeigt eine weitere Ausführungsform der vorliegenden Erfindung. In dem vorliegenden Fall ist eine Schneidleiste 21 vorgesehen, die mehrere hier drei Produktführungen 22 aufweist, so dass hier drei Produkte parallel zueinander aufgeschnitten werden können. Unterhalb der jeweiligen Produktführung 22 befindet sich jeweils ein Zwischenlegepapierführungsmodul 24, in dem der Kanal 5 vorgesehen ist, aus dem das Zwischenlegepapier in den Aufschneidebereich ausgeschossen wird. Wie insbesondere anhand des Schnittes A-A gesehen werden kann, wird das Zwischenlegepapierführungsmodul vorzugsweise in einer Aufnahme 25 der Schneidleiste angeordnet, die das Modul 24 reversibel, d.h. austauschbar aufnimmt. Bei der mittleren Darstellung ist unterhalb der rechten und linken Produktführungen 22 jeweils ein Führungsmodul 24 vorgesehen, während bei dem mittleren Modul dies aus Anschauungsgründen weggelassen worden ist. Vorzugsweise sind die Aufnahmen jeweils als Taschen ausgeführt, in die das jeweilige Modul jeweils eingeführt werden und dort befestigt werden kann. Vorzugsweise weist die Tasche Führungsmittel für das Führungsmodul auf, so dass es innerhalb der Tasche in einer klar definierten Position befestigt wird.

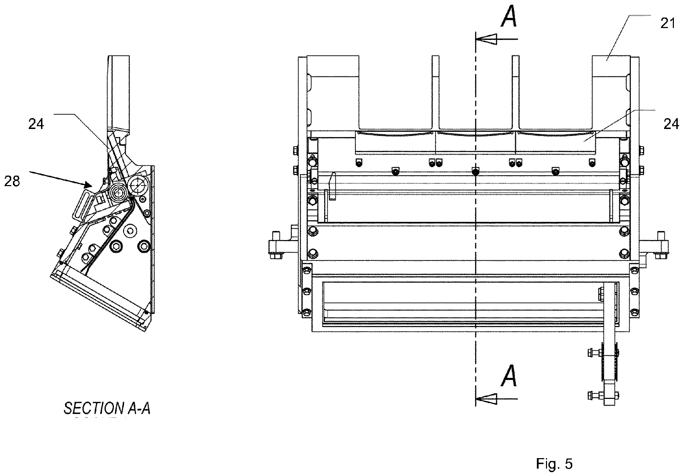

**Figur 5** zeigt weitere Details der Einführung des Zwischenlegepapiers in den Aufschneidebereich. Das Zwischenlegepapier wird mittels eines Antriebs, hier zwei Rollen 28, in den Kanal eingeführt, hier in den Kanal des Zwischenlegepapierführungsmoduls, und aus diesem in den Aufschneidebereich eingeschossen.

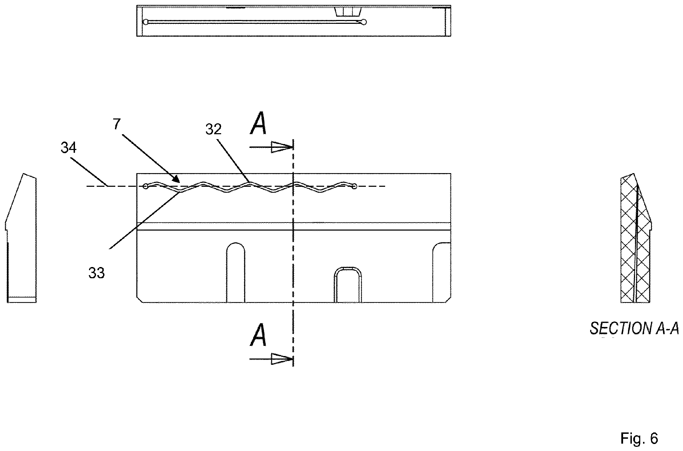

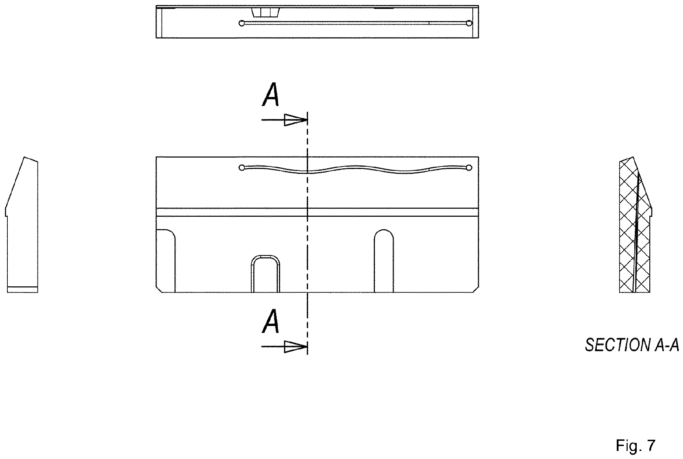

Die **Figuren 6** **und** **7** zeigen jeweils eine mögliche Form der Öffnung 7 des Kanalendes 6. Bei der Ausführungsform gemäß **Figur 6** ist diese Öffnung gezackt, d. h. sie weist mehrere zackenförmige Erhebungen 32 bzw. Vertiefungen 33 auf, die aus einer gedachten ebenen Form 34 des Zwischenlegepapiers hier beidseitig hervorstehen. Bei der Ausführungsform gemäß **Figur 7** kann im Wesentlichen auf die Ausführungen gemäß **Figur 6** Bezug genommen werden, wobei die Erhebungen bzw. Vertiefungen hier wellen- vorzugsweise kreissegmentförmig gestaltet sind.

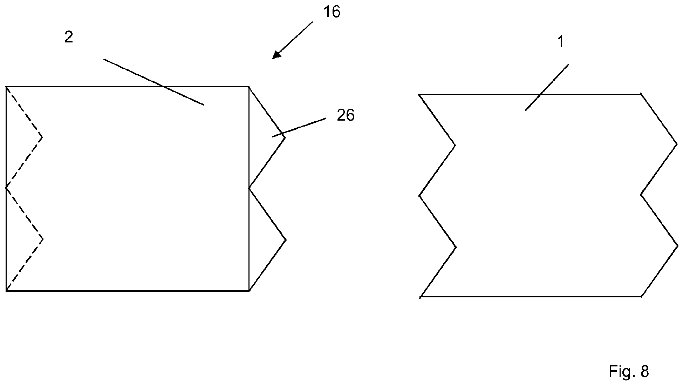

**Figur 8** zeigt eine Ausführungsform des erfindungsgemäßen Zwischenlegepapiers 1, wobei die linke Darstellung eine Portion 16 mit dem Zwischenlegepapier 1 und die rechte Darstellung lediglich das Zwischenlegepapier 1 zeigt. Anhand der linken Darstellung ist deutlich zu erkennen, dass hier zwei Grifflaschen 26 aus den Lebensmittelscheiben, die in dem vorliegenden Fall rechteckförmig vorgesehen sind, hervorstehen. Diese Grifflaschen 26 können von zwei oder mehr Fingern eines Benutzers ergriffen werden, wodurch sie in einfacher Weise gemeinsam oder unabhängig von einer darauf liegenden Lebensmittelscheibe 2 ergriffen und abgezogen werden können. Die Form der Grifflasche 26 kann durch die Form der Öffnung 7 des Kanals 5 vorgegeben werden. Für die Herstellung des vorliegenden Zwischenlegepapiers ist die Öffnung gezackt.

**Figur 9** zeigt ein Zwischenlegepapier 1 in einer Verpackungsmulde 30. Dadurch, dass die Ecken des Einlegepapiers 1 abgeflacht, hier abgerundet, worden sind, besteht keine Gefahr, dass diese in die Siegelebene 31, in der die Verpackungsmulde mit einer Deckelfolie verbunden wird, hineinragen. Ein solches Zwischenlegepapier lässt sich mit einer Öffnung 7 wie sie in Figur 2 dargestellt ist, erzeugen.

### Bezugszeichenliste

- 1: Zwischenlegepapier
- 2: abgeschnittene Lebensmittelscheibe
- 3: abzuschneidende Lebensmittelscheibe
- 4: Aufschneidebereich
- 5: Kanal
- 6: Kanalende
- 7: Öffnung
- 8: Förderrichtung des Zwischenlegepapiers
- 9: Profilierung quer zur Förderrichtung
- 10: ausgeschossener Abschnitt
- 11: Schneidmesser
- 12: Ebene durch den tiefsten Punkt der Auflage
- 13: Produkt, Lebensmittelriegel
- 14: Bewegungsrichtung des Lebensmittelriegels
- 15: Vorrichtung zum Einschießen des Zwischenlegepapiers
- 16: Portion bestehend aus mehreren Lebensmittelscheiben
- 17: Drehachse des Schneidmessers
- 18: Auflage des Lebensmittelriegels
- 19: hochstehender Bereich des Zwischenlegepapiers
- 20: Kanalanfang
- 21: Schneidleiste
- 22: Produktführung
- 23: Produktauflage
- 23': unterster Punkt/Linie der Produktauflage
- 24: Zwischenlegepapierführungsmodul
- 25: Aufnahme für Zwischenlegepapierführungsmodul
- 26: Grifflasche
- 27: Aufschneidevorrichtung
- 28: Antrieb für das Zwischenlegepapier, Rolle(n)
- 29: abgeflachte, abgerundete Ecke
- 30: Verpackungsmulde
- 31: Siegelebene
- 32: Erhebung
- 33: Vertiefung
- 34: ebene Form

## Patentansprüche

1. Aufschneidevorrichtung (27) mit einem Schneidmesser (11), das von dem vorderen Ende eines Produkts (13) Lebensmittelscheiben (2, 3) abschneidet und eine Vorrichtung (15, 21, 24) zum Einlegen eines Zwischenlegepapiers (1) zwischen einer ersten und einer zweiten Lebensmittelscheibe (2, 3), bzw. einer zweiten und dritten, dritten und vierten Lebensmittelscheibe usw. aufweist, wobei die Vorrichtung (15, 21, 24) einen Kanal (5) aufweist, in dem das Zwischenlegepapier geführt ist und in einem Zeitintervall zwischen dem Aufschneiden der ersten und der zweiten Lebensmittelscheibe aus dem Kanal (5) in einen Aufschneidebereich (4) gelangt, wobei der Kanal (5) so vorgesehen ist, dass er den ebenen Querschnitt des Zwischenlegepapiers formt, **dadurch gekennzeichnet, dass** zumindest der Kanal (5) einstückig vorgesehen ist.

2. Aufschneidevorrichtung (27) nach Anspruch 1, **dadurch gekennzeichnet, dass** zumindest der Bereich, in dem der Kanal vorgesehen ist, gedruckt ist.

3. Aufschneidevorrichtung (27) nach einem der voranstehenden Ansprüche, **dadurch gekennzeichnet, dass** der Kanal ein Kanalende (6) aufweist, aus dem das Zwischenlegepapier austritt, und das Produkt zum Schneiden in einer Führung (22) mit einer Produktauflage (23) geführt ist und wobei bezogen auf eine Vertikale das Kanalende (6) abschnittsweise oberhalb des untersten Punkts (23') der Produktauflage vorgesehen ist.

4. Aufschneidevorrichtung (27) nach Anspruch 3, **dadurch gekennzeichnet, dass** das Kanalende zumindest abschnittsweise parallel zu der Produktauflage vorgesehen ist.

5. Aufschneidevorrichtung (27) nach einem der voranstehenden Ansprüche, **dadurch gekennzeichnet, dass** der Kanal (5) reversibel an einer Schneidleiste (21) angebracht ist.

6. Aufschneidevorrichtung (27) nach einem der voranstehenden Ansprüche, **dadurch gekennzeichnet, dass** sie eine Schneidleiste aufweist und dass der Kanal (5) in einer Tasche (25) der Schneidleiste (21) angeordnet ist.

7. Verfahren zur Herstellung einer Aufschneidevorrichtung nach einem der Ansprüche 1 - 6 **dadurch gekennzeichnet, dass** zumindest der Kanal durch Gießen, Spritzgießen, Drahterodieren und/oder durch ein 3D-Druckverfahren einstückig hergestellt wird.

## Claims

1. Cutting apparatus (27) having a cutting knife (11), which cuts slices of food (2, 3) from the front end of a product (13), and has a device (15, 21, 24) for inserting an interleaving paper (1) between a first and a second slice of food (2, 3) or a second and third, third and fourth slice of food and so on, the device (15, 21, 24) having a channel (5) in which the interleaving paper is guided and, in a time interval between the cutting of the first and the second slice of food, passes out of the channel (5) into a cutting region (4), the channel (5) being provided in such a way that it shapes the flat cross section of the interleaving paper, **characterized in that** at least the channel (5) is provided in one piece.

2. Cutting apparatus (27) according to Claim 1,
**characterized in that** at least the region in which the channel is provided is printed.

3. Cutting apparatus (27) according to one of the preceding claims, **characterized in that** the channel has a channel end (6) from which the interleaving paper emerges, and the product to be cut is guided in a guide (22) having a product support (23), and wherein, referred to a vertical, the channel end (6) is partly provided above the lowest point (23') of the product support.

4. Cutting apparatus (27) according to Claim 3,
**characterized in that** the channel end is at least partly provided parallel to the product support.

5. Cutting apparatus (27) according to one of the preceding claims, **characterized in that** the channel (5) is fitted reversibly to a cutting bar (21).

6. Cutting apparatus (27) according to one of the preceding claims, **characterized in that** it has a cutting bar, and **in that** the channel (5) is arranged in a pocket (25) of the cutting bar (21).

7. Method for producing a cutting apparatus according to one of Claims 1 - 6,
**characterized in that** at least the channel is produced in one piece by casting, injection moulding, wire erosion and/or by a 3-D printing process.

## Revendications

1. Dispositif de coupe (27) comprenant une lame de coupe (11) qui découpe des tranches de produit alimentaire (2, 3) depuis l'extrémité avant d'un produit (13) et qui présente un dispositif (15, 21, 24) pour insérer un papier intercalaire (1) entre une première et une deuxième tranche de produit alimentaire (2, 3) ou entre une deuxième et une troisième, une troisième et une quatrième tranche de produit alimentaire, etc., le dispositif (15, 21, 24) présentant un conduit (5) dans lequel le papier intercalaire est guidé et parvient après un certain intervalle de temps entre la découpe de la première et de la deuxième tranche de produit alimentaire, depuis le conduit (5) jusque dans une région de découpe (4), le conduit (5) étant prévu de telle sorte qu'il forme la section transversale plane du papier intercalaire, **caractérisé en ce qu'**au moins le conduit (5) est prévu d'une seule pièce.

2. Dispositif de coupe (27) selon la revendication 1, **caractérisé en ce qu'**au moins la région dans laquelle est prévu le conduit est pressée.

3. Dispositif de coupe (27) selon l'une quelconque des revendications précédentes, **caractérisé en ce que** le conduit présente une extrémité de conduit (6) de laquelle sort le papier intercalaire et le produit à découper est guidé dans un guide (22) avec un support de produit (23) et, par rapport à une verticale, l'extrémité du conduit (6) est prévue en partie au-dessus du point le plus bas (23') du support de produit.

4. Dispositif de coupe (27) selon la revendication 3, **caractérisé en ce que** l'extrémité du conduit est prévue au moins en partie parallèlement au support de produit.

5. Dispositif de coupe (27) selon l'une quelconque des revendications précédentes, **caractérisé en ce que** le conduit (5) est monté de manière réversible sur une barre de coupe (21).

6. Dispositif de coupe (27) selon l'une quelconque des revendications précédentes, **caractérisé en ce qu'**il présente une barre de coupe et **en ce que** le conduit (5) est disposé dans une cavité (25) de la barre de coupe (21).

7. Procédé de fabrication d'un dispositif de coupe selon l'une quelconque des revendications précédentes 1 à 6, **caractérisé en ce qu'**au moins le conduit est fabriqué d'une seule pièce par moulage, moulage par injection, électroérosion et/ou par un procédé de pression en trois dimensions.
